(19) Europäisches Patentamt
European Patent Office
Office européen des brevets

(11) Veröffentlichungsnummer: **0 043 795**
**B1**

(12) **EUROPÄISCHE PATENTSCHRIFT**

(45) Veröffentlichungstag der Patentschrift: **01.08.84**

(51) Int. Cl.³: **C 09 B 29/085**, C 09 B 43/42 // D06P1/18, D06P3/54

(21) Anmeldenummer: **81810242.8**

(22) Anmeldetag: **15.06.81**

(54) **Monoazoverbindungen.**

(30) Priorität: **20.06.80 CH 4752/80**

(43) Veröffentlichungstag der Anmeldung: **13.01.82 Patentblatt 82/2**

(45) Bekanntmachung des Hinweises auf die Patenterteilung: **01.08.84 Patentblatt 84/31**

(84) Benannte Vertragsstaaten: **CH DE FR GB LI**

(56) Entgegenhaltungen:
**EP-A-0 036 081**
**DE-A-2 101 912**
**DE-A-2 916 137**
**FR-A-1 190 641**
**GB-A-1 412 922**
**GB-A-2 026 012**

(73) Patentinhaber: **CIBA-GEIGY AG, Postfach, CH-4002 Basel (CH)**

(72) Erfinder: **Schwander, Hansrudolf, Dr., Unterm Schellenberg 189, CH-4125 Riehen (CH)**

**EP 0 043 795 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Monoazoverbindungen und deren Mischungen untereinander, Verfahren zu deren Herstellung und deren Verwendung als Farbstoffe zum Färben und Bedrucken von Textilmaterialien, welche mit Dispersionsfarbstoffen anfärbbar sind.

Die neuen Monoazoverbindungen entsprechen der Formel I

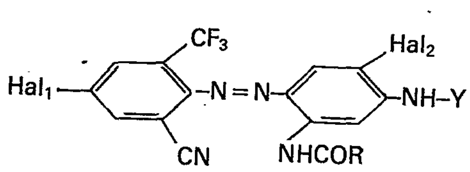

(I)

worin bedeuten:
$Hal_1$ und $Hal_2$ unabhängig voneinander ein Halogenatom, R eine gegebenenfalls durch Halogen oder Alkoxy substituierte $C_1$–$C_4$ Alkylgruppe oder eine gegebenenfalls durch Alkoxy substituierte $C_1$–$C_4$ Alkoxygruppe, und Y eine gegebenenfalls substituierte $C_1$–$C_8$ Alkylgruppe oder eine gegebenenfalls durch Halogen substituierte $C_3$–$C_4$ Alkenylgruppe.

$Hal_1$ und $Hal_2$ in der Bedeutung eines Halogenatoms stellen, unabhängig voneinander, das Fluor-, Chlor- oder Bromatom dar. In bevorzugten Monoazoverbindungen bedeutet $Hal_1$ das Chlor- oder Bromatom und $Hal_2$ das Chloratom.

R in der Bedeutung einer $C_1$–$C_4$-Alkylgruppe stellt die $CH_3$–, $C_2H_5$–, $C_3H_7$-n, $C_3H_7$-iso, $C_4H_9$-sec., $C_4H_9$-tert. oder $C_4H_9$-n Gruppe dar, welche Alkylgruppen substituiert sein können, durch Halogen wie Fluor, Chlor oder Brom oder durch eine Alkoxygruppe wie die Methoxy, Äthoxy oder Propoxygruppe. Bedeutet R eine $C_1$–$C_4$-Alkoxygruppe, so handelt es sich beispielsweise um die Methoxy-, Äthoxy- oder Propoxygruppe, wobei diese Alkoxygruppen noch substituiert sein können durch eine Alkoxygruppe. In bevorzugten Monoazoverbindungen bedeutet R eine unsubstituierte $C_1$–$C_4$ Alkylgruppe, insbesondere die Methylgruppen.

Y in der Bedeutung einer $C_1$–$C_8$-Alkylgruppe stellt sowohl eine unverzweigte oder verzweigte, als auch unsubstituierte oder substituierte Alkylgruppe dar; es handelt sich beispielsweise um die Methyl-, Äthyl-, n-Propyl-, iso-Propyl-, n-Butyl, sec.-Butyl, tert.-Butyl- oder die n- oder iso-Pentyl, -Hexyl-, Heptyl- oder -Octylgruppe.

Als Substituenten derselben kommen z.B. in Frage: OH; gegebenenfalls durch beispielsweise CN oder Alkoxy substituiertes $C_1$–$C_4$-Alkoxy; Halogen wie Fluor, Chlor oder Brom; die CN-Gruppe; die Phenoxy-Gruppe; die -COO-Phenyl Gruppe; die gegebenenfalls im Alkylrest durch Furyl, OH oder Alkoxy substituierte -COO-Alkyl Gruppe; die N(CO-Alkyl)(Alkyl) Gruppe, wobei der Alkylrest 1 bis 4 Kohlenstoffatome aufweist; die gegebenenfalls im Alkylrest durch beispielsweise OH substituierte -CON(Alkyl)$_2$ Gruppe, wobei die Alkylreste gleich oder verschieden sein können und 1 bis 4 Kohlenstoffatome aufweisen; oder die

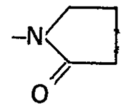 oder 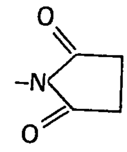 Gruppe. All diese Substituenten können ein- oder mehrmals (gleich oder verschieden) in den Alkylresten Y vorhanden sein. Desweiteren bedeutet Y eine $C_3$–$C_4$ Alkenylgruppe, wie z.B. die Allylgruppe, welche gegebenenfalls substituiert sein kann, durch Halogen wie Fluor, Chlor oder Brom. In bevorzugten Monoazoverbindungen der Formel I bedeutet Y eine substituierte $C_1$–$C_8$ Alkylgruppe, insbesondere eine durch OH substituierte $C_1$–$C_4$ Alkylgruppe, vor allem die β-Hydroxypropylgruppe.

Besonders gute Eigenschaften haben Monoazoverbindungen der Formel I, worin bedeuten:
$Hal_1$ das Chlor- oder Bromatom, $Hal_2$ das Chloratom, R die $-CH_3$, $-OC_2H_5$, $-OC_2H_4OCH_3$ oder $-CH_2OCH_3$ Gruppe, und Y die $C_2H_5$-Gruppe, welche gegebenenfalls substituiert ist durch $-OC_2H_4CN$, $-OC_2H_4CN$, $-OC_2H_4OCH_3$, $-OCH_3$, $-OC_2H_5$, $-O-C_6H_5$,

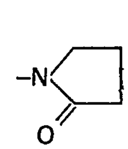 oder 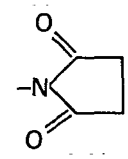

$-COOCH_3$, $-COOC_2H_5$, $-COOC_2H_4OH$, $-COOC_2H_4OCH_3$, $-COOC_2H_4OC_2H_5$,

$-COOCH_2-$ 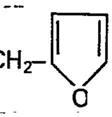

$-N(CH_3)(OCCH_3)$ oder $CON(CH_3)(C_2H_4OH)$ oder Y bedeutet die $C_3H_7$-Gruppe, welche ein- oder mehrmals, gleich oder verschieden substituiert ist durch OH, Cl, CN, $OC_6H_5$, $OC_4H_9$, $COOC_6H_5$, $COOCH_3$ und $COOC_2H_5$ oder Y bedeutet die $C_4H_9$-Gruppe, welche gegebenenfalls substituiert ist durch OH, $COOCH_3$ oder $COOC_2H_5$ oder Y bedeutet die $-CH_2-CH=CH-Cl$ Gruppe.

Besonders bevorzugt sind jedoch Monoazoverbindungen der Formel

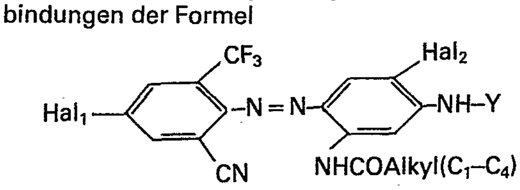

worin $Hal_1$, $Hal_2$ und Y die unter Formel I angegebene Bedeutung haben.

Die Herstellung der neuen Monoazoverbindungen der Formel I kann nach verschiedenen Methoden erfolgen, beispielsweise derart, dass man 1 Mol einer Verbindung der Formel II

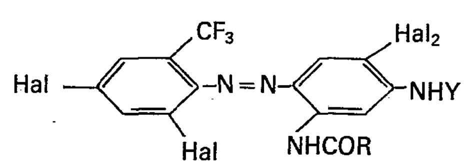

(II)

worin Hal unabhängig von $Hal_1$ und $Hal_2$ ein Halogenatom bedeutet und die übrigen Symbole die unter Formel I angegebene Bedeutung haben mit 1 Mol eines Metallcyanides umsetzt.

Die Umsetzung mit Metallcyaniden, vorzugsweise mit Kupfercyanid erfolgt vorzugsweise in einem aprotisch polaren Lösungsmittel wie Dimethylsulfoxyd, Dimethylformamid oder N-Methylpyrrolidon bei einer Temperatur von etwa 40 bis 150°C, vorzugsweise 80 bis 130°C.

Man geht vorzugsweise von einer Verbindung der Formel II aus, worin Hal Brom, $Hal_2$ das Chloratom, R eine unsubstituierte $C_1$–$C_4$-Alkylgruppe, vor allem die Methylgruppe, und Y eine substituierte $C_1$–$C_8$ Alkylgruppe, vor allem eine durch OH substituierte $C_1$–$C_4$ Alkylgruppe bedeutet.

Die Verbindungen der Formel II sind ebenfalls neu und können hergestellt werden durch diazotieren eines Amins der Formel

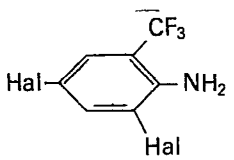

(III)

und kuppeln auf eine Kupplungskomponente der Formel IV

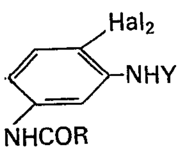

(IV)

worin $Hal_1$, Hal, $Hal_2$, Y und R die angegebene Bedeutung haben.

Die Diazotierungsreaktion und Kupplungsreaktion erfolgen auf bekannte Art, z. B. wie beschrieben in Ullmanns Encyklopädie der technischen Chemie, Bd. 5 (1954), Seite 783 ff.

Man erhält die Amine der Formel (III) durch Halogenierung, beispielsweise durch Bromierung von Anilinverbindungen der Formel

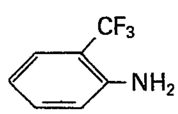

in Eisessig oder HCl bei einer Temperatur von etwa 20 – 25°C.

Die Kupplungskomponenten der Formel (IV) werden beispielsweise erhalten, indem man in ein Anilinderivat der Formel

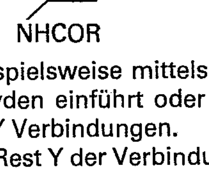

den Rest Y beispielsweise mittels den Y entsprechenden Epoxyden einführt oder durch Kondensation mit Hal-Y Verbindungen.

Falls sich im Rest Y der Verbindung der Formel I noch Halogenatome oder eine Hydroxylgruppe befindet und falls gewünscht, so können diese anschliessend in eine Cyanidgruppe bzw. in eine Carbonsäureestergruppe umgewandelt werden.

Eine andere Möglichkeit der Darstellung der Monoazoverbindungen der Formel I besteht darin, dass man ein Amin der Formel V

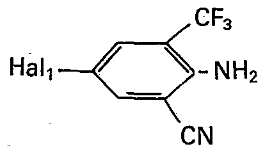

(V)

diazotiert und mit einer Kupplungskomponente der Formel VI

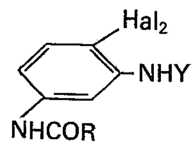

(VI)

worin die Symbole die unter Formel I angegebene Bedeutung haben, kuppelt.

Die Amine der Formel V sind bekannt oder können nach bekannten Methoden hergestellt werden, beispielsweise derart, dass man ein Mol eines Amins der Formel

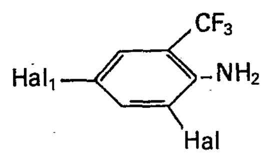

mit einem Mol eines Metallcyanids vor allem Kupfercyanid wie beschrieben umsetzt.

Die Kupplungskomponenten der Formel VI sind ebenfalls bekannt oder können nach bekannten Methoden hergestellt werden.

Aus der grossen Vielzahl der Zwischenprodukte der Formeln II bis VI sei auf diejenigen in den Beispielen verwiesen.

Verwendung finden die neuen Monoazoverbindungen der Formel I und deren Mischungen untereinander vor allem als Farbstoffe zum Färben und Bedrucken von Materialien, insbesondere Textilmaterialien welche mit Dispersionsfarbstoffen anfärbbar sind. Vor ihrer Verwendung werden die Farbstoffe vorteilhaft in Farbstoffpräparate übergeführt. Hierzu kann man sie zerkleinern, so dass ihre Teilchengrösse im Mittel zwischen 0,01 und 10µm beträgt. Das Zerkleinern kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man, nach Zugabe von Wasser, in langer Flotte (Flottenverhältnis grösser als 1:5) oder kurzer Flotte (Flottenverhältnis 1:1 bis 1:5) färben, klotzen oder bedrucken.

Die neuen Monoazoverbindungen ziehen aus wässriger Suspension ausgezeichnet auf Formkörper aus vollsynthetischen oder halbsynthetischen hochmolekularen Stoffen auf. Besonders geeignet sind sie zum Färben, Klotzen oder Bedrucken von Fasern, Fäden oder Vliesen, Geweben oder Gewirken aus linearen, aromatischen Polyestern sowie aus Cellulose-2 1/2-acetat und Cellulosetriacetat. Auch synthetische Polyamide, Polyolefine, Acrylnitrilpolymerisationsprodukte und Polyvinylverbindungen lassen sich mit ihnen färben und bedrucken. Besonders wertvolle Färbungen werden auf linearen, aromatischen Polyestern erhalten. Diese sind im allgemeinen Polykondensationsprodukte aus Terephtalsäure und Glykolen, besonders Äthylenglykol, oder Polykondensationsprodukte aus Terephtalsäure und 1,4-Bis-(hydroxymethyl)-hexahydrobenzol.

Man färbt die Polyesterfasern nach an sich bekannten Verfahren in Gegenwart von Carriern bei Temperaturen zwischen etwa 80 und 125°C oder in Abwesenheit von Carriern unter Druck bei etwa 100 bis 140°C nach dem Ausziehverfahren. Ferner kann man diese Fasern mit den wässrigen Dispersionen der Monoazoverbindungen Klotzen oder bedrucken und die erhaltene Imprägnierung bei etwa 140°C bis 230°C fixieren, z. B. mit Hilfe von Wasserdampf, Kontakthitze oder heisser Luft. Cellulose-2 1/2-acetat färbt man vorzugsweise zwischen ungefähr 65 bis 85°C und Cellulosetriacetat bei Temperaturen bis zu 115°C.

Meist gibt man die üblichen Dispergiermittel zu, die vorzugsweise anionisch oder nichtionogen sind und auch im Gemisch miteinander verwendet werden können.

Bekannte anionische Dispergiermittel, die für das Verfahren in Betracht kommen, sind beispielsweise Kondensationsprodukte aus Naphthalinsulfonsäuren und Formaldehyd, insbesondere Dinaphthylmethandisulfonate, Ester von sulfonierter Bernsteinsäure, Türkischrotöl, und Alkalisalze von Schwefelsäureestern der Fettalkohle, z. B. Natriumlaurylsulfat oder Natriumcetylsulfat, Sulfitcelluloseablauge bzw. deren Alkalisalze, Seifen oder Alkalisulfate von Monoglyzeriden von Fettsäuren. Beispiele bekannter und besonders geeigneter nichtionogener Dispergiermittel sind Anlagerungsprodukte von etwa 3 bis 40 Mol Äthylenoxyd an Alkylphenole, Fettalkohole oder Fettamine und deren neutrale Schwefelsäureester.

Beim Klotzen und Bedrucken wird man die üblichen Verdickungsmittel verwenden, z. B. modifizierte oder nichtmodifizierte natürliche Produkte, beispielsweise Alginate, Britischgummi, Gummi arabicum, Kristallgummi, Johannisbrotkernmehl, Tragant, Carboxymethylcellulose, Hydroxyäthylcellulose, Stärke oder synthetische Produkte, beispielsweise Polyacrylamide oder Polyvinylalkohole.

Die erhaltenen Färbungen weisen gute Allgemeinechtheiten auf, wie Thermofixier-, Plissier-, Chlor- und Nassechtheit, z. B. Wasser-, Wasch- un Schweissechtheit; besonders hervorzuheben ist ihre gute Lichtechtheit, Brillianz und Sublimationsechtheit sowie vor allem das Vermögen mit beliebigen Blaufarbstoffen vermischt und auf Textilmaterial appliziert kein "catalytic fading" zu zeigen.

Gegenüber nächtsvergleichbaren Farbstoffen aus GB-A-2026012, DE-A-2101912, GB-A-1412922 und EP-A-0036081 besitzen die erfindungsgemässen Farbstoffe eine hohe Brillanz verbunden mit einer guten Lichtechtheit und weisen zudem kein catalytic fading auf. Dies war überraschend und in den genannten Literaturstellen nicht nahegelegt.

Die folgenden Beispiele veranschaulichen die Erfindung ohne sie darauf zu limitieren; Temperaturen sind in Grad Celsius angegeben; Teile (T) bedeuten, sofern nichts anderes angegeben ist, Gewichtsteile.

Beispiel 1

Zu einem Gemisch bestehend aus 32,2 g 2-Amino-benzotrifluorid und 140 ml 18%iger Salzsäure lässt man bei einer Temperatur von 20 – 25°C innerhalb von 2 – 3 Stunden bei gutem Rühren eine Lösung von 67,2 g Brom in 20 ml Essigsäure zutropfen. Man rührt die gebildete Suspension noch während 1 Stunde bei Raumtemperatur, worauf man das gebildete Produkt der Formel

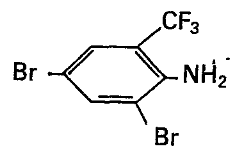

abfiltriert, hierauf im 18%iger Salzsäure und zuletzt mit Wasser wäscht. Nach Trocknung im Vakuum bei Raumtemperatur erhält man das Produkt in Form farbloser Kristalle, welche sich z. B. in Äthylcellosolve leicht lösen.

Beispiel 2

Zu 1000 g 65%iger Schwefelsäure lässt man bei einer Temperatur von 60 – 65° 165 g 2-Amino-benzotrifluorid zulaufen, wobei sich eine farblose Suspension bildet. Hierauf gibt man bei 60°C 500 g 36%ige Salzsäure zu, wobei man eine Lösung erhält. Bei einer Temperatur von 58 – 60°C lässt man nun innerhalb von ca. 1½ Stunden 220 g 35%iges Wasserstoffperoxyd zutropfen, wobei gekühlt werden muss. Man lässt noch 1 Stunde bei derselben Temperatur nachrühren, worauf man die organische Phase abtrennt. Man wäscht dieselbe viermal mit je 50 ml Wasser, bis dieses kongoneutral reagiert, worauf man die organische Phase über Magnesiumsulfat trocknet. Durch fraktionierte Destillation mit einer Vigreux-Kolonne erhält man das Produkt der Formel

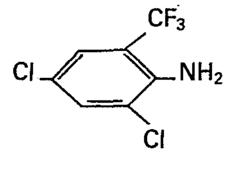

als dünnflüssiges Öl, Kp 15 mm Hg(2000 Pa)/93 – 95°C.

Beispiel 3

Man rührt ein Gemisch bestehend aus 55,35 g 2-Amino-4-acetylamino-1-chlor-benzol 44 g 2-Chlor-2'-cyan-diäthyläther, 6,6 g Magnesiumoxyd und 30 ml Äthylcellosolve bei 110°C bis sich im Dünnschicht-Chromatogramm nur noch eine Spur des

Edukts 2-Amino-4-acetylamino-1-chlor-benzol nachweisen lässt. Man verdünnt hierauf mit Essigsäure auf ein Volumen von 450 ml. Man erhält eine Lösung, welche das gebildete Produkt der Formel

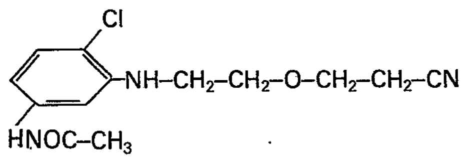

enthält. Diese Lösung kann direkt für Azokupplungen verwendet werden.

Verwendet man, bei sonst gleichem Vorgehen, anstelle von 2-Chlor-2'-cyan-diäthyläther äquivalente Mengen der in der folgenden Tabell 1 unter Kolonne I aufgeführten Halogenverbindungen, so erhält man entsprechende Lösungen der unter II aufgeführten Produkte. Wo solche freie Hydroxygruppen auftreten, verwendet man anstelle von Essigsäure ein anderes Lösungsmittel, wie z. B. Äthylcellosolve oder Dimethylsulfoxyd.

Tabelle 1

| | | |
|---|---|---|
| | | 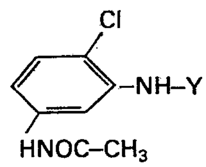 II |
| Nr. | I Halogenverbindung | Y |
| 4 | $Cl-C_2H_4-OOC-CH_3$ | $-C_2H_4-OOC-CH_3$ |
| 5 | $Br-C_2H_4-OOC-CH_3$ | $-C_2H_4-OOC-CH_3$ |
| 6 | $Cl-C_2H_4-OOC-C_2H_5$ | $-C_2H_4-OOC-C_2H_5$ |
| 7 | $Br-C_2H_4-OOC-C_2H_5$ | $-C_2H_4-OOC-C_2H_5$ |
| 8 | $Cl-C_2H_4-OOC-C_2H_4-OH$ | $-C_2H_4-OOC-C_2H_4-OH$ |
| 9 | $Br-C_2H_4-OOC-C_2H_4-OH$ | $-C_2H_4-OOC-C_2H_4-OH$ |
| 10 | $Cl-CH_2-CH_2-CH_2OH$ | $-CH_2-CH_2-CH_2-OH$ |
| 11 | $Br-CH_2-CH_2-CH_2-OH$ | $-CH_2-CH_2-CH_2-OH$ |
| 12 | $Cl-CH_2-CH_2-CH_2-CH_2-OH$ | $-CH_2-CH_2-CH_2-CH_2-OH$ |
| 13 | $Br-CH_2-CH_2-CH_2-CH_2-OH$ | $-CH_2-CH_2-CH_2-CH_2-OH$ |
| 14 | $Cl-C_2H_4-O-CH_3$ | $-C_2H_4-O-CH_3$ |
| 15 | $Cl-C_2H_4-O-C_2H_5$ | $-C_2H_4-O-C_2H_5$ |
| 16 | $Cl-C_2H_4-O-C_2H_4-OCH_3$ | $-C_2H_4-O-C_2H_4-OCH_3$ |
| 17 | $Br-C_2H_4-O-$ 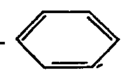 | $-C_2H_4-O-$ 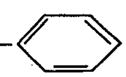 |
| 18 | 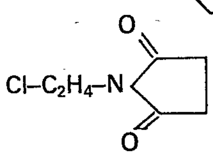 | 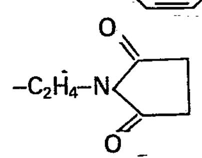 |
| 19 | 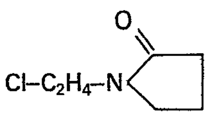 | 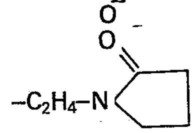 |
| 20 | 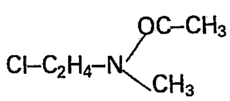 | 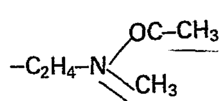 |
| 21 | 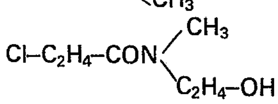 | 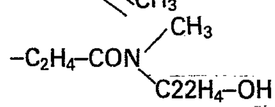 |
| 22 | $Cl-C_2H_4-COOCH_3$ | $-C_2H_4-COOCH_3$ |
| 23 | $Cl-C_2H_4-COOC_2H_5$ | $-C_2H_4-COOC_2H_5$ |
| 24 | $Cl-C_2H_4-COO-C_2H_4-OH$ | $-C_2H_4-COO-C_2H_4-OH$ |
| 25 | $Cl-C_2H_4-COO-C_2H_4-OCH_3$ | $-C_2H_4-COO-C_2H_4-OCH_3$ |
| 26 | $Cl-C_2H_4-COO-C_2H_4-O-C_2H_5$ | $-C_2H_4-COO-C_2H_4-O-C_2H_5$ |
| 27 | $Cl-C_2H_4-COO-CH_2-$ 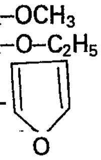 | $-C_2H_4-COO-CH_2-$ 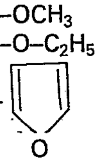 |
| 27a | $-Cl-CH_2-CH=CHCl$ | $=CH_2-CH=CHCl$ |

Beispiel 28

Zu einem Gemisch, bestehend aus 14,2g 1-Chlor-2,4-diamino-benzol, 40 ml Chlorbenzol und 20 ml Wasser lässt man bei einer Temperatur von 8 – 10°C bei intensivem Rühren 14,4g 2-Methoxyätylchlorkohlensäureester zutropfen, wobei man den pH-Wert durch Zugabe von Sodalösung bei 6,5 – 7 hält. Man rührt noch 30 Min. bei denselben Bedingungen und überprüft die Acylierung im Dünnschicht-Chromatogramm. Falls sich noch Edukt nachweisen lässt, wird noch Säurechlorid nachgegeben und unter denselben Bedingungen wie oben umgesetzt.

Zur Isolierung des Produkts trennt man von der wässrigen Phase ab, entfernt das Chlorbenzol im Vakuum und reinigt das Rohprodukt durch Umkristallisation aus Äthylcellosolve. Man erhält das Produkt der Formel

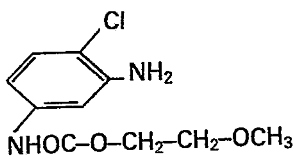

in Form farbloser Kristalle, welche sich in Dimethylformamid leicht lösen.

Verwendet man bei sonst gleichem Vorgehen anstelle des oben erwähnten Chlorkohlensäureesters äquivalente Menge Äthyl-chlorkohlensäure-ester, bzw. Methoxyacetylchlorid, so erhält man die Verbindungen der Formel

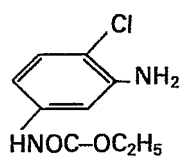

bzw.

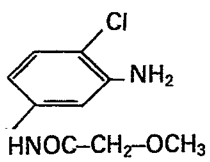

Beispiel 29

Man rührt ein Gemisch, bestehend aus 73,5g der Verbindung der Formel

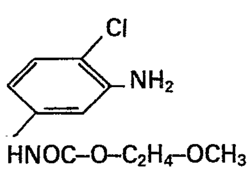

49,4g n-Butylbromid, 6,6g Magnesiumoxyd und 60 ml Äthylcellosolve bei einer Temperatur von 110 – 112°C, bis sich im Dünnschicht-Chromatogramm nur noch spurenweise Edukt nachweisen lässt. Nach beendeter Umsetzung verdünnt man mit Essigsäure und stellt mit Essigsäure auf ein Volumen von 450 ml. Die erhaltene Lösung, welche das Produkt der Formel

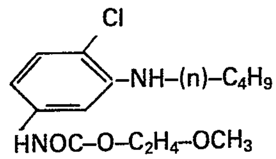

enthält, lässt sich direkt für Azokupplungen verwenden.

Verwendet man bei sonst gleichem Vorgehen anstelle des oben angeführten Edukts äquivalente Mengen der beiden im vorgehenden Beispiel 28 aufgeführten Produkte, so erhält man Lösungen, welche die Produkte der Formeln

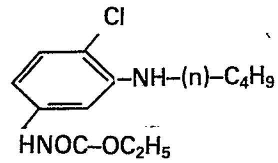

bzw.

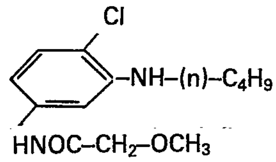

enthalten.

Beispiel 30

In einem Gemisch, bestehend aus 49g der Verbindung der Formel

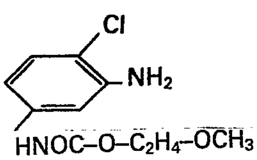

und 100g Essigsäure lässt man bei einer Temperatur von 40–42°C innerhalb von ca. 1½ Stunden 12,8g Propylenoxyd zutropfen, worauf man noch 1 Stunde nachrührt und im Dünnschicht-Chromatogramm auf Edukt prüft. Falls sich noch Edukt nachweisen lässt, wird Propylenoxyd nachgegeben und unter denselben Bedingungen umgesetzt, bis sich höchstens noch Spuren an Edukt nachweisen lassen.

Nach beendeter Umsetzung ergänzt man das Volumen mit Essigsäure auf 200 ml. Die erhaltene Lösung enthält die Verbindung der Formel

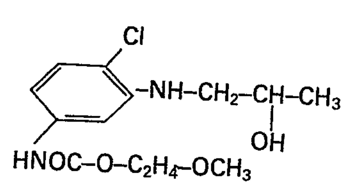

und lässt sich direkt zu Azokupplungen verwenden.

Verwendet man anstelle des oben eingesetzten Eduktes äquivalente Mengen der Verbindungen der Formeln

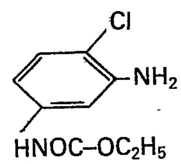

bzw.

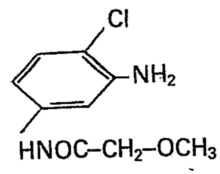

so erhält man bei sonst gleichem Vorgehen Lösungen, welche die Verbindungen der Formeln

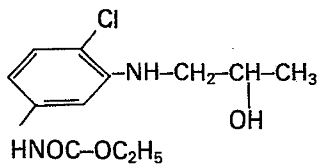

bzw.

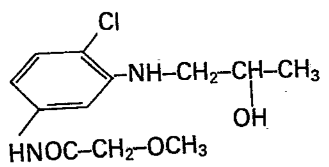

enthalten.

Beispiel 31

In einem Gemisch, bestehend aus 36,9g 3-Amino-4-chloracetanilid und 80g Essigsäure lässt man bei einer Temperatur von 40 – 42°C innerhalb von ca. 1½ Stunden 28,6g Butylglycidäther zutropfen, worauf man noch 2 Stunden bei derselben Temperatur rühren lässt. Man überprüft im Dünnschicht-Chromatogramm auf Edukt und gibt nötigenfalls noch Glycidäther zu, bis sich höchstens noch Spuren des Edukts nachweisen lassen. Man verdünnt mit Essigsäure auf ein Volumen von 200 ml und erhält so eine Lösung, welche das Produkt der Formel

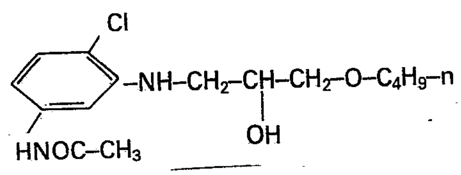

enthält. Diese Lösung kann direkt für Azokupplungen verwendet werden.

Verwendet man, bei sonst gleichem Vorgehen anstelle von Butylghlycidäther äquivalente Mengen der in der folgenden Tabelle 2 unter Kolonne I aufgeführten Epoxyde, so erhält man die unter Kolonne II aufgeführten Produkte in Form entsprechender Lösungen.

Tabelle 2

| | | II |
|---|---|---|
| | | 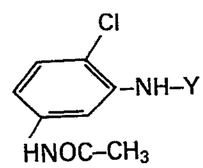 |
| | I | |
| Nr. | Epoxyd | Y |
| 32 | 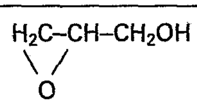 | 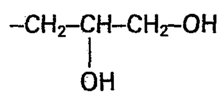 |
| 33 | 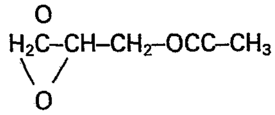 | 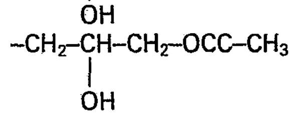 |
| 34 | 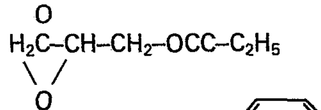 | 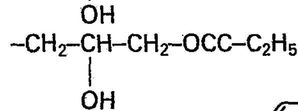 |
| 35 | 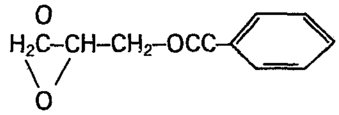 | 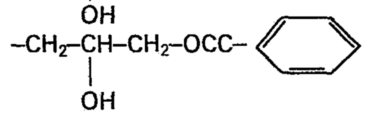 |
| 36 | 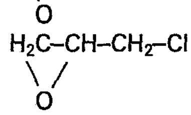 | 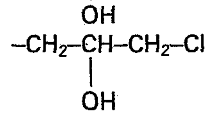 |

Beispiel 37

12,75g 2-Trifluormethyl-4,6-dibrom-anilin werden in 60 ml Essigsäure-Propionsäure mit 0,04 Mol Nitrosylschwefelsäure diazotiert. Zu der Diazolösung gibt man bei 0°C 0,04 Mol der Verbindung der Formel

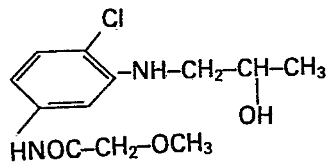

gelöst in Essigsäure und kuppelt nach Zugabe von Ammonacetat bei pH 2. Man erhält das Kupplungsprodukt der Formel

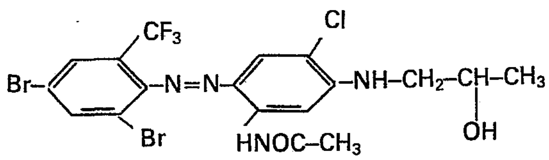

Das Produkt stellt ein gelb-braunes Pulver das, welches sich in Dimethylformamid mit gelber Farbe löst.

Verwendet man, bei sonst gleichem Vorgehen, anstelle der oben eingesetzten Kupplungskomponente äquivalente Mengen der Kupplungskomponenten der Formeln

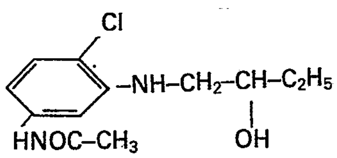

bzw.

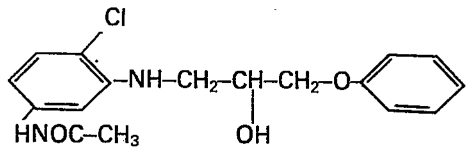

so erhält man die Kupplungsprodukte der Formeln

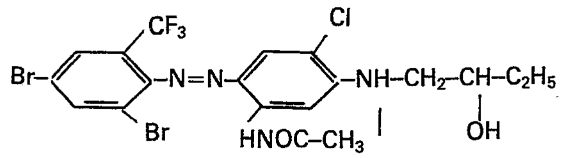

bzw.

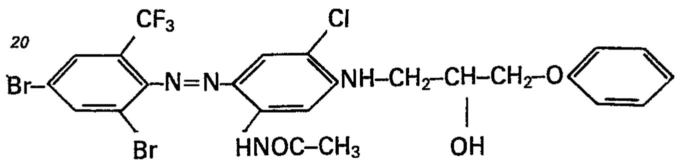

Verwendt man bei sonst gleichem vorgehen anstelle der oben eingesetzten Kupplungskomponenten die in den vorangegangenen Beispielen und Tabellen 1 und 2 beschriebenen Kupplungskomponenten, so erhält man die Kupplungsprodukte der Tabelle 3.

Tabelle 3

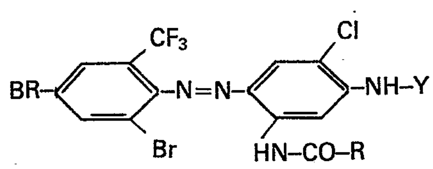

| Nr. | R | Y | Lösungsfarbe in Dimethylformamid |
|---|---|---|---|
| 38 | $-CH_3$ | $-CH_2-CH_2-O-CH_2-CH_2-CN$ | gelb |
| 39 | $-CH_3$ | $-CH_2-CH_2-OOC-CH_3$ | gelb |
| 40 | $-CH_3$ | $-C_2H_4-OOC-C_2H_4-OH$ | gelb |
| 41 | $-CH_3$ | $-CH_2-CH_2-CH_2-OH$ | gelb |
| 42 | $-CH_3$ | $-CH_2-CH_2-CH_2-CH_2-OH$ | gelb |
| 43 | $-CH_3$ | $-CH_2-CH_2-OCH_3$ | gelb |
| 44 | $-CH_3$ | $-CH_2-CH_2-OC_2H_5$ | gelb |
| 45 | $-CH_3$ | $-C_2H_4-O-C_2H_4-OCH_3$ | gelb |
| 46 | $-CH_3$ | 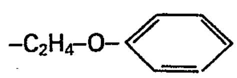 | gelb |
| 47 | $-CH_3$ | 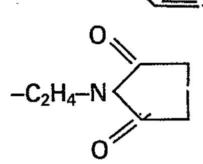 | gelb |

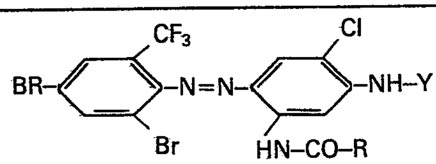

| Nr. | R | Y | Lösungsfarbe in Dimethylformamid |
|---|---|---|---|
| 48 | $-CH_3$ | 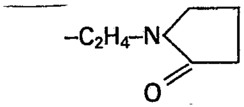 | gelb |
| 49 | $-CH_3$ | 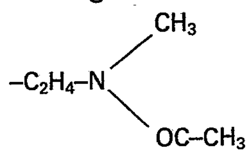 | gelb |
| 50 | $-CH_3$ | 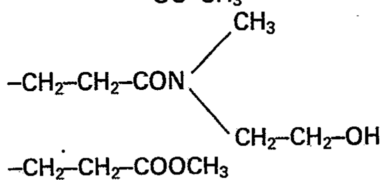 | gelb |
| 51 | $-CH_3$ | $-CH_2-CH_2-COOCH_3$ | gelb |
| 52 | $-CH_3$ | $-CH_2-CH_2-COOC_2H_5$ | gelb |
| 53 | $-CH_3$ | $-CH_2-CH_2-COO-C_2H_4-OH$ | gelb |
| 54 | $-CH_3$ | $-C_2H_4-COO-C_2H_4-OCH_3$ | gelb |
| 55 | $-CH_3$ | $-C_2H_4-COO-C_2H_4-OC_2H_5$ | gelb |
| 56 | $-CH_3$ | 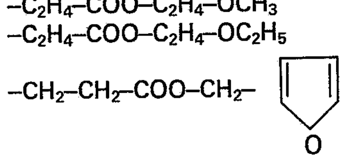 | gelb |
| 57 | $-O-C_2H_4-OCH_3$ | $-CH_2-CH_2-CH_2-CH_3$ | gelb |
| 58 | $-OC_2H_5$ | $-CH_2-CH_2-CH_2-CH_3$ | gelb |
| 59 | $-CH_2OCH_3$ | $-CH_2-CH_2-CH_2-CH_3$ | gelb |
| 60 | $-O-C_2H_4-OCH_3$ | 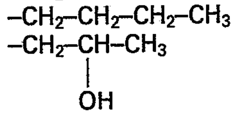 | gelb |
| 61 | $-OC_2H_5$ | 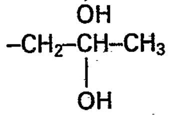 | gelb |
| 62 | $-CH_2-OCH_3$ | 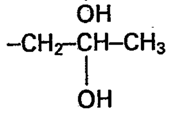 | gelb |
| 63 | $-CH_3$ | 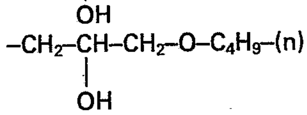 | gelb |
| 64 | $-CH_3$ | 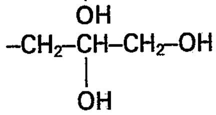 | gelb |
| 65 | $-CH_3$ | 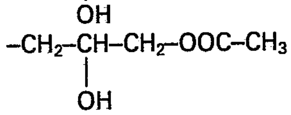 | gelb |
| 66 | $-CH_3$ | 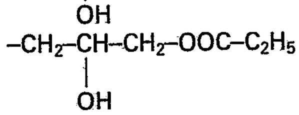 | gelb |
| 67 | $-CH_3$ | 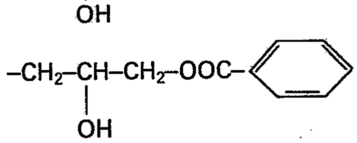 | gelb |
| 68 | $-CH_3$ | 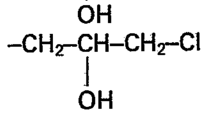 | gelb |

Beispiel 69

9,20 g 2-Trifluormethyl-4,6-dichlor-anilin werden in 60 ml Essigsäure-Propionsäure mit 0,04 Mol Nitrosylschwefelsäure als 40%ige Lösung in Schwefelsäure bei 0–5°C diazotiert.

Zur Diazolösung gibt man bei 0–5°C 0,04 Mol der Verbindung der Formel

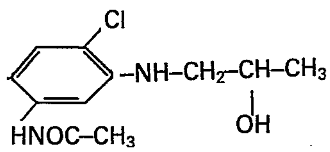

in Form einer Lösung in Essigsäure, worauf man durch Zugabe von Ammonacetat auf pH 2 stellt. Nach beendigter Kupplung wird das Kupplungsprodukt der Formel

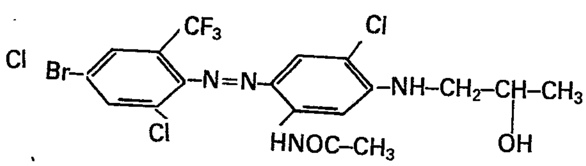

als gelb-braunes Pulver isoliert, welches sich in Dimethylformamid mit gelber Farbe löst.

Verwendet man, bei sonst gleichem Vorgehen, anstelle der eingesetzten Kupplungskomponente äquivalente Mengen der Kupplungskomponenten der Formeln

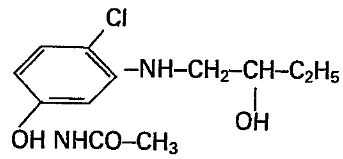

bzw.

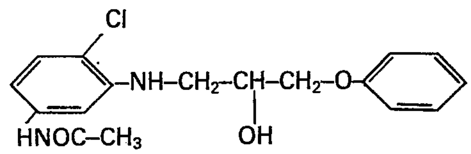

so erhält man die Kupplungsprodukte der Formeln

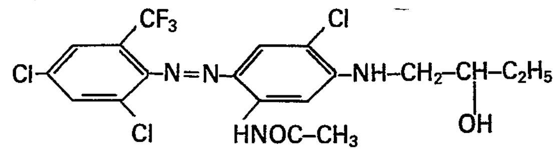

bzw.

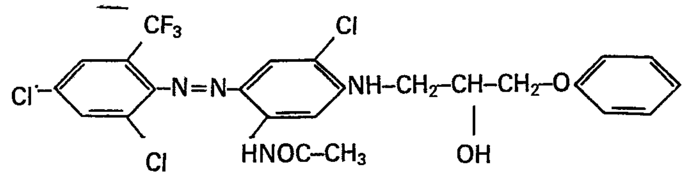

Verwendet man bei sonst gleichem Vorgehen anstelle der oben eingesetzten Kupplungskomponenten die in den vorangegangenen Beispielen und Tabellen 1 und 2 beschriebenen Kupplungskomponenten, so erhält man die Kupplungsprodukte der Tabelle 4.

Tabelle 4

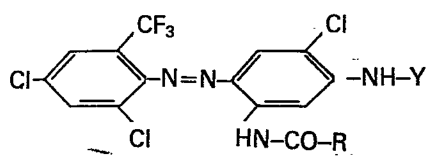

| Nr. | R | Y | Lösungsfarbe in Dimethylformamid |
|---|---|---|---|
| 70 | $-CH_3$ | $-CH_2-CH_2-O-CH_2-CH_2-CN$ | gelb |
| 71 | $-CH_3$ | $-CH_2-CH_2-OOC-CH_3$ | gelb |
| 72 | $-CH_3$ | $-C_2H_4-OOC-C_2H_4-OH$ | gelb |
| 73 | $-CH_3$ | $-CH_2-CH_2-CH_2-OH$ | gelb |
| 74 | $-CH_3$ | $-CH_2-CH_2-CH_2-CH_2-OH$ | gelb |
| 75 | $-CH_3$ | $-CH_2-CH_2-OCH_3$ | gelb |
| 76 | $-CH_3$ | $-C_2H_4-O-C_2H_5$ | gelb |
| 77 | $-CH_3$ | $-C_2H_4-O-C_2H_4-OCH_3$ | gelb |
| 78 | $-CH_3$ | $-CH_2-CH_2-O-$ 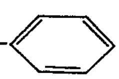 | gelb |
| 79 | $-CH_3$ | $-CH_2-CH_2-$ 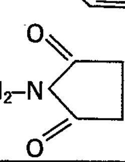 | gelb |

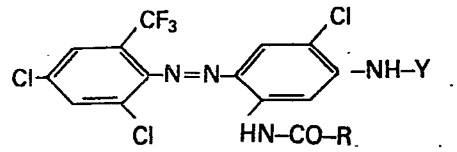

| Nr. | R | Y | Lösungsfarbe in Dimethylformamid |
|---|---|---|---|
| 80 | $-CH_3$ | 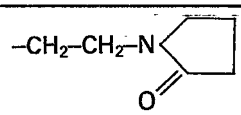 | gelb |
| 81 | $-CH_3$ | 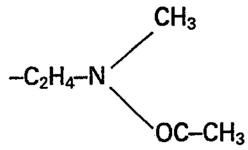 | gelb |
| 82 | $-CH_3$ | 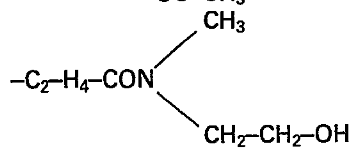 | gelb |
| 83 | $-CH_3$ | $-CH_2-CH_2-COOCH_3$ | gelb |
| 84 | $-CH_3$ | $-CH_2-CH_2-COOC_2H_5$ | gelb |
| 85 | $-CH_3$ | $-C_2-H_4-COO-C_2H_4-OH$ | gelb |
| 86 | $-CH_3$ | $-C_2H_4-COO-C_2H_4-OCH_3$ | gelb |
| 87 | $-CH_3$ | $-C_2H_4-COO-C_2H_4-OC_2H_5$ | gelb |
| 88 | $-CH_3$ | 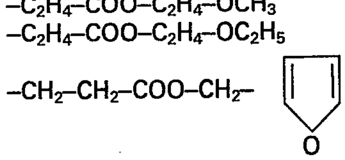 | gelb |
| 89 | $-O-C_2H_4-OCH_3$ | $-CH_2-CH_2-CH_2-CH_3$ | gelb |
| 90 | $-OC_2H_5$ | $-CH_2-CH_2-CH_2-CH_3$ | gelb |
| 91 | $-CH_2OCH_3$ | $-CH_2-CH_2-CH_2-CH_3$ | gelb |
| 92 | $-O-C_2H_4-OCH_3$ | 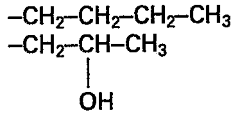 | gelb |
| 93 | $-OC_2H_5$ | 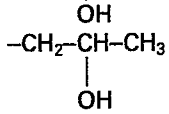 | gelb |
| 94 | $-CH_2-OCH_3$ | 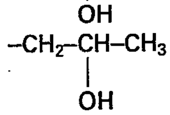 | gelb |
| 95 | $-CH_3$ | 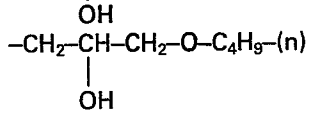 | gelb |
| 96 | $-CH_3$ | 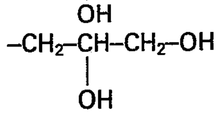 | gelb |
| 97 | $-CH_3$ | 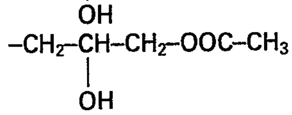 | gelb |
| 98 | $-CH_3$ | 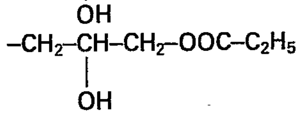 | gelb |
| 99 | $-CH_3$ | 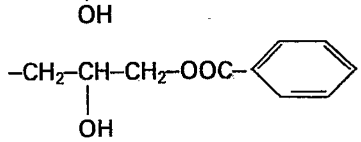 | gelb |
| 100 | $-CH_3$ | 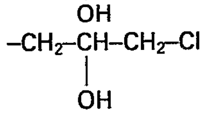 | gelb |

Beispiel 101

Man rührt ein Gemisch, bestehend aus 11,45 g der Verbindung der Formel

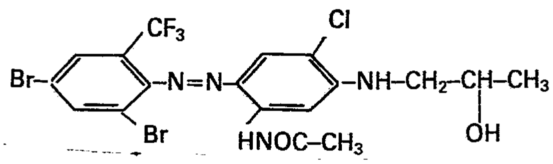

2 g Kupfer-(I)-cyanid und 20 ml Dimethylsulfoxyd während 4 Stunden bei einer Temperatur von 48 – 50°C, worauf man 20 ml n-Butanol zugibt und unter Rühren erkalten lässt. Man isoliert die gebildete Fällung des Farbstoffes auf einer Nutsche und wäscht zuerst mit einer Mischung n-Butanol/Dimethylsulfoxyd (1:1), dann mit Methanol. Zur Reinigung kristallisiert man den Farbstoff aus n-Butanol um, wobei man die Farbstofflösung klärt. Nach Trocknung im Vakuum bei 80°C bildet der erhaltene Farbstoff der Formel

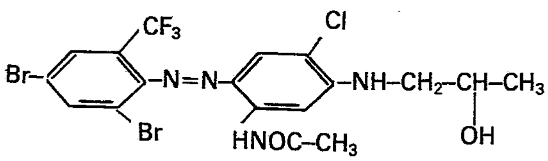

ein rotes Pulver, welches sich in Dimethylformamid mit blaustichig-roter Farbe löst.

Als Dispersionsfarbstoff auf Polyestermaterialien appliziert, erhält man blaustichig-rote Färbungen, welche gute Echtheiten, insbesondere eine gute Lichtechtheit aufweisen.

Verwendet man anstelle des oben aufgeführten Eduktes äquivalente Mengen der Edukte der Formeln

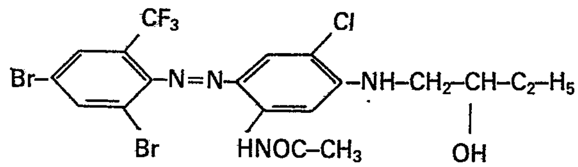

bzw.

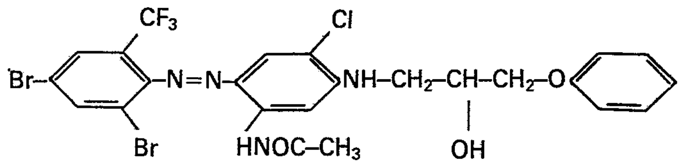

so erhält man bei sonst gleichem Vorgehen die Farbstoffe der Formeln

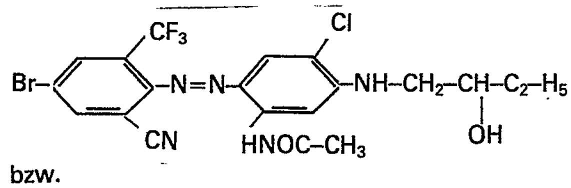

bzw.

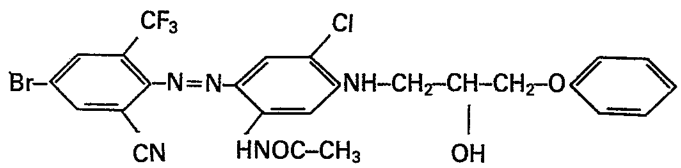

welche ähnliche gute Eigenschaften aufweisen.

Verwendet man bei sonst gleichem Vorgehen anstelle der oben aufgeführten Edukte die Verbindungen des Beispieles 37 und Tabelle 3, so erhält man die entsprechenden Farbstoffe der folgenden Tabelle 5, deren Färbungen auf Polyestermaterialien (PES) ebenfalls gute Echtheitseigenschaften aufweisen.

Tabelle 5

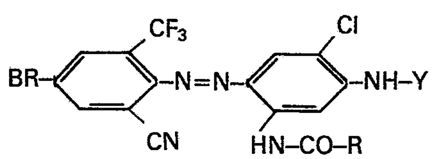

| Nr. | R | Y | Nuance auf PES |
|---|---|---|---|
| 102 | $-CH_3$ | $-CH_2-CH_2-O-CH_2-CH_2-CN$ | rot |
| 103 | $-CH_3$ | $-CH_2-CH_2-OOC-CH_3$ | rot |
| 104 | $-CH_3$ | $-CH_2-CH_2-OOC-CH_2-CH_2-OH$ | rot |
| 105 | $-CH_3$ | $-CH_2-CH_2-CH_2-OH$ | rot |
| 106 | $-CH_3$ | $-CH_2-CH_2-CH_2-CH_2-OH$ | rot |
| 107 | $-CH_3$ | $-CH_2-CH_2-OCH_3$ | rot |
| 108 | $-CH_3$ | $-CH_2-CH_2-OC_2H_5$ | rot |
| 109 | $-CH_3$ | $-C_2H_4-O-C_2H_4-OCH_3$ | rot |
| 110 | $-CH_3$ | 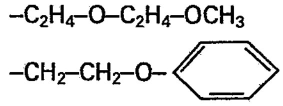 | rot |
| 111 | $-CH_3$ | 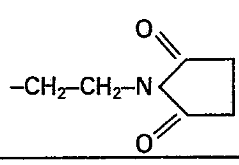 | rot |

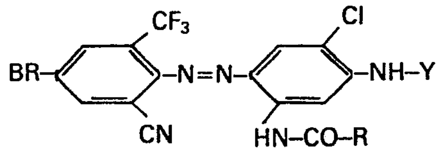

| Nr. | R | Y | Nuance auf PES |
|---|---|---|---|
| 112 | $-CH_3$ | $-CH_2-CH_2-$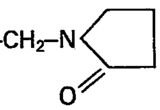 | rot |
| 113 | $-CH_3$ | $-CH_2-CH_2-$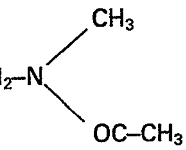 | rot |
| 114 | $-CH_3$ | $-CH_2-CH_2-CO$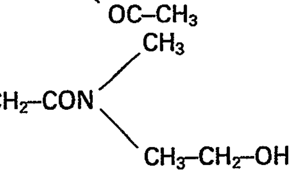 | rot |
| 115 | $-CH_3$ | $-CH_2-CH_2-COOCH_3$ | rot |
| 116 | $-CH_3$ | $-CH_2-CH_2-COOC_2H_5$ | rot |
| 117 | $-CH_3$ | $-CH_2-CH_2-COO-C_2H_4-OH$ | rot |
| 118 | $-CH_3$ | $-CH_2-CH_2-COO-C_2H_4-OCH_3$ | rot |
| 119 | $-CH_3$ | $-CH_2-CH_2-COO-C_2H_4-OC_2H_5$ | rot |
| 120 | $-CH_3$ | $-CH_2-CH_2-COO-CH_2-$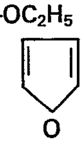 | rot |
| 121 | $-O-C_2H_4-OCH_3$ | $-CH_2-CH_2-CH_2-CH_3$ | rot |
| 122 | $-OC_2H_5$ | $-CH_2-CH_2-CH_2-CH_3$ | rot |
| 123 | $-CH_2OCH_3$ | $-CH_2-CH_2-CH_2-CH_3$ | rot |
| 124 | $-O-C_2H_4-OCH_3$ | $-CH_2-CH-CH_3$<br>\|<br>OH | rot |
| 125 | $-OC_2H_5$ | $-CH_2-CH-CH_3$<br>\|<br>OH | rot |
| 126 | $-CH_2-OCH_3$ | $-CH_2-CH-CH_3$<br>\|<br>OH | rot |
| 127 | $-CH_3$ | $-CH_2-CH-CH_2-O-C_4H_9-(n)$<br>\|<br>OH | rot |
| 128 | $-CH_3$ | $-CH_2-CH-CH_2-OH$<br>\|<br>OH | rot |
| 129 | $-CH_3$ | $-CH_2-CH-CH_2-OOC-CH_3$<br>\|<br>OH | rot |
| 130 | $-CH_3$ | $-CH_2-CH-CH_2-OOC-C_2H_5$<br>\|<br>OH | rot |
| 131 | $-CH_3$ | $-CH_2-CH-CH_2-OOC-$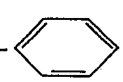<br>\|<br>OH | rot |
| 132 | $-CH_3$ | $-CH_2-CH-CH_2-Cl$<br>\|<br>OH | rot |

Beispiel 133

Man rührt ein Gemisch, bestehend aus 9,65 g der Verbindung der Formel

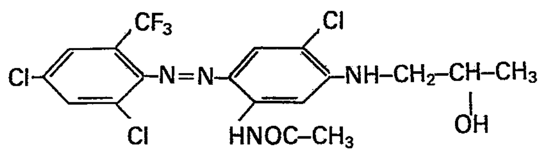

2 g Kupfer-(I)-cyanid und 20 ml Dimethylsulfoxyd während 2 Stunden bei einer Temperatur von 98–100°C, worauf man 20 ml n-Butanol zugibt und unter Rühren erkalten lässt. Man rührt noch während 30 Minuten bei Raumtemperatur und isoliert hierauf das gebildete Produkt durch Filtration auf einer Nutsche. Man wäscht mit einem Gemisch n-Butanol/Dimethylsulfoxyd (1:1) bis das Filtrat eine reine rote Farbe aufweist und zuletzt noch mit Methanol. Zur Reinigung wird aus n-Butanol umkristallisiert, verbunden mit einer Klärfiltration. Nach Trocknung im Vakuum bei 80°C bildet der so erhaltene Farbstoff der Formel

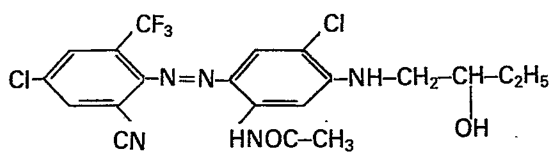

ein rotes Pulver, welches sich in Dimethylformamid mit roter Farbe löst. Als Dispersionsfarbstoff auf Polyestermaterialien appliziert erhält man blaustichig-rote Färbungen mit guten Echtheitseigenschaften, insbesondere mit einer guten Lichtechtheit.

Verwendet man bei sonst gleichem Vorgehen anstelle der oben aufgeführten Verbindung äquivalente Mengen der Verbindungen der Formeln

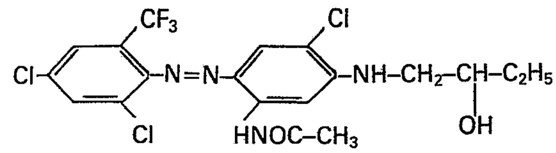

bzw.

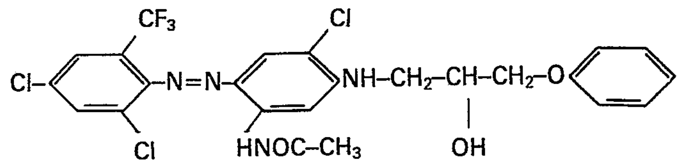

so erhält man die Farbstoffe der Formeln

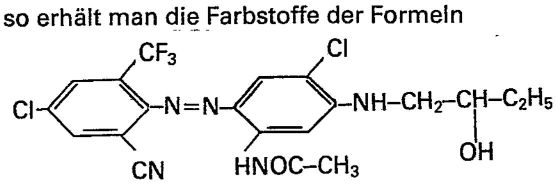

bzw.

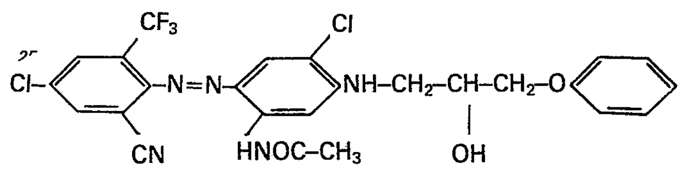

welche, als Dispersionsfarbstoffe auf Polyestermaterialien gefärbt, ähnlich gute Echtheitseigenschaften aufweisen.

Verwendet man, bei sonst gleichem Vorgehen, anstelle der oben verwendeten Edukte äquivalente Mengen der Verbindungen der Beispiele 69 und der Tabelle 4, so erhält man die entsprechenden in der folgenden Tabelle 6 aufgeführten Farbstoffe, welche als Dispersionsfarbstoffe auf Polyestermaterialien gefärbt, ebenfalls gute Echtheitseigenschaften ergeben.

Tabelle 6

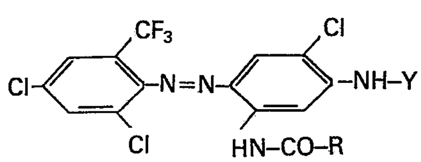

| Nr. | R | Y | Nuance auf Polyester-materialien |
|---|---|---|---|
| 134 | $-CH_3$ | $-CH_2-CH_2-O-CH_2-CH_2-CN$ | rot |
| 135 | $-CH_3$ | $-CH_2-CH_2-OOC-CH_3$ | rot |
| 136 | $-CH_3$ | $-CH_2-CH_2-OOC-CH_2-CH_2-OH$ | rot |
| 137 | $-CH_3$ | $-CH_2-CH_2-CH_2-OH$ | rot |
| 138 | $-CH_3$ | $-CH_2-CH_2-CH_2-CH_2-OH$ | rot |
| 139 | $-CH_3$ | $-CH_2-CH_2-OCH_3$ | rot |
| 140 | $-CH_3$ | $-CH_2-CH_2-O-C_2H_5$ | rot |
| 141 | $-CH_3$ | $-C_2H_4-O-C_2H_4-OCH_3$ | rot |

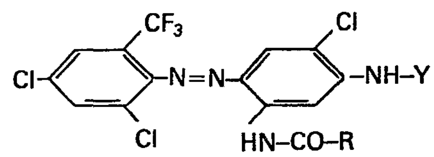

| Nr. | R | Y | Nuance auf Polyester-materialien |
|---|---|---|---|
| 142 | $-CH_3$ | 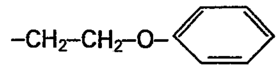 | rot |
| 143 | $-CH_3$ | 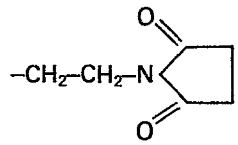 | rot |
| 144 | $-CH_3$ | 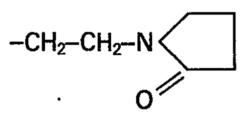 | rot |
| 145 | $-CH_3$ | 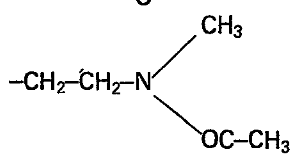 | rot |
| 146 | $-CH_3$ | 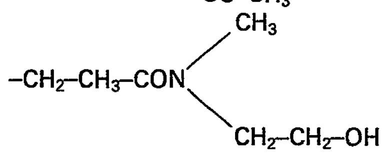 | rot |
| 147 | $-CH_3$ | $-CH_2-CH_2-COOCH_3$ | rot |
| 148 | $-CH_3$ | $-CH_2-CH_2-COOC_2H_5$ | rot |
| 149 | $-CH_3$ | $-CH_2-CH_2-COO-C_2H_4-OH$ | rot |
| 150 | $-CH_3$ | $-CH_2-CH_2-COO-C_2H_4-OCH_3$ | rot |
| 151 | $-CH_3$ | $-CH_2-CH_2-COO-C_2H_4-OC_2H_5$ | rot |
| 152 | $-CH_3$ | 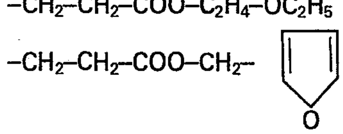 | rot |
| 153 | $-CH_3$ | 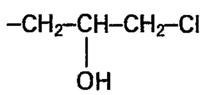 | rot |

Beispiel 154

Man rührt ein Gemisch bestehend aus 5,60 g der Verbindung der Formel

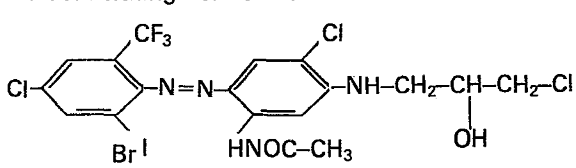

0,90 g Natrium-acetat, 0,10 g Kaliumjodid und 30 ml Dimethylsulfoxyd während 12 Stunden bei einer Temperatur von 88–90°C, lässt hierauf auf 40°C abkühlen und gibt 1,0 g Cuprocyanid zu, worauf man noch weitere 3 Stunden bei 38–40°C rühren lässt. Man versetzt hierauf mit 3 ml Methanol, lässt auf Raumtemperatur erkalten und isoliert nach 2 Stunden das ausgefallene Produkt durch Filtration. Man wäscht zuerst mit einem Gemisch Dimethylsulfoxyd-Methanol 10:1, dann mit Methanol, worauf man den erhaltenen Farbstoff der Formel

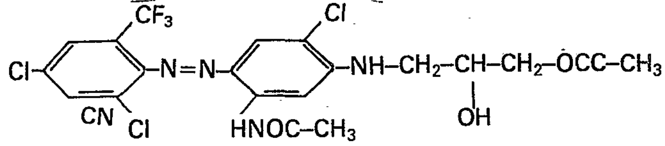

in Vakuum bei 70°C trocknet. Der Farbstoff bildet ein rotes Pulver, welches sich in Dimethylformamid mit blaustichig-roter Farbe löst.

Beispiel 155

Man mischt 1 T des trockenen, coupagefreien Farbstoffes der Formel

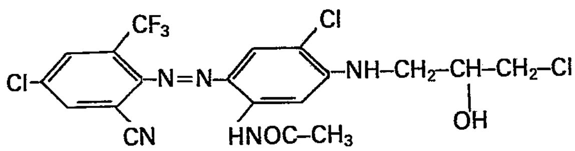

mit 1 T des trockenen, coupagefreien Farbstoffes der Formel

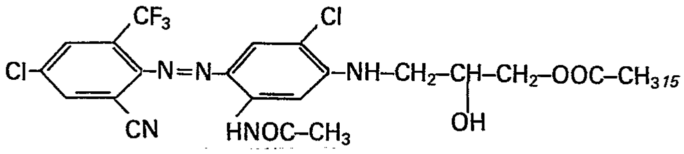

und gibt das erhaltene Gemisch in eine Glasperlenmühle zusammen mit 1 T Dinaphthylmethandisulfonat (Na-Salz) und Wasser und mahlt das Gemisch solange bis eine Korngösse von etwa 2 mm oder kleiner erreicht ist. Die entstehende Paste, bestehend aus dem Farbstoffgemisch, Dispergator und Wasser wird anschliessend mit 3 Teilen Natriumligninsulfonat versetzt. Die erhaltene Paste wird sodann der Sprühtrocknung unterworfen, wobei ein pulverförmiges Färbepräparat erhalten wird.

Dieses Färbepräparat kann zum Färben von Polyestermaterialien z.B. nach dem HT-Verfahren verwendet werden, wobei das Färbebad eine gute Dispersionsstabilität aufweist. Man erhält eine rote Polyesterfärbung mit guter Lichtechtheit.

Beispiel 156

2 T des gemäss Beispiel 101 erhaltenen Farbstoffes werden in 4000 T Wasser dispergiert. Zu dieser Dispersion gibt man 12 T des Natriumsalzes von o-Phenylphenol sowie 12 T Diammoniumphosphat und färbt 100 T Garn aus Polyäthylenglykolterephthalat 90 Minuten lang bei 95 bis 98°C in dieser Flotte.

Die Färbung wird anschliessend gespült und mit wässriger Natronlauge und einem Dispergator nachbehandelt. Man erhält so eine brillante licht- und sublimierechte, blaustichig-rote Färbung.

Beispiel 157

1 T des gemäss Beispiel 101 erhaltenen Farbstoffes wird mit 2 T einer 50%igen wässerigen Lösung des Natriumsalzes der Dinaphthylmethandisulfonsäure nass vermahlen und getrocknet.

Dieses Farbstoffpräparat wird mit 40 T einer 10%igen wässerigen Lösung des Natriumsalzes der N-Benzylheptadecyl-benzimidazoldisulfonsäure verrührt und 4 T einer 40%igen Essigsäurelösung zugegeben. Durch Verdünnen mit Wasser wird daraus ein Färbebad von 4000 T bereitet.

In dieses Bad geht man bei 50°C mit 100 T eines Polyesterfaserstoffes ein, steigert die Temperatur innert einer halben Stunde auf 120 bis 130°C und färbt eine Stunde in geschlossenem Gefäss bei dieser Temperatur. Anschliessend wird gut gespült. Man erhält eine brillante blaustichig-rote Färbung von guter Licht- und Sublimierechtheit.

Beispiel 158

Polyäthylenglykolterephthalatgewebe wird auf einem Foulard bei 40°C mit einer Flotte folgender Zusammensetzung imprägniert:

20 T des gemäss Beispiel 101 erhaltenen Farbstoffes fein dispergiert in
10 T Natriumalginat
20 T Triäthanolamin
20 T Octylphenolpolyglykoläther und
930 T Wasser.

Das auf ca. 100% abgequetschte Gewebe wird bei 100°C getrocknet und anschliessend während 30 Sekunden bei einer Temperatur von 210°C fixiert. Die gefärbte Ware wird mit Wasser gespült, geseift und getrocknet. Man erhält eine brillante, licht- und sublimierechte, blaustichig-rote Färbung.

**Patentansprüche**

1. Monoazoverbindungen und deren Mischungen untereinander der Formel I

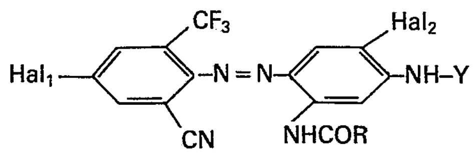 (I)

worin bedeuten:

$Hal_1$ und $Hal_2$ unabhängig voneinander ein Halogenatom, R eine gegebenenfalls durch Halogen oder Alkoxy substituierte $C_1$–$C_4$ Alkylgruppe oder eine gegebenenfalls durch Alkoxy substituierte $C_1$–$C_4$ Alkoxygruppe, und Y eine gegebenenfalls substituierte $C_1$–$C_8$ Alkylgruppe oder eine gegebenenfalls durch Halogen substituierte $C_3$–$C_4$ Alkenylgruppe.

2. Monoazoverbindungen gemäss Anspruch 1, dadurch gekennzeichnet, dass $Hal_1$ das Bromatom bedeutet.

3. Monoazoverbindungen gemäss Anspruch 1, dadurch gekennzeichnet, dass $Hal_2$ das Chloratom bedeutet.

4. Monoazoverbindungen gemäss Anspruch 1, dadurch gekennzeichnet, dass R eine unsubstituierte $C_1$–$C_4$ Alkylgruppe bedeutet.

5. Monoazoverbindungen gemäss Anspruch 4, dadurch gekennzeichnet, dass R die Methylgruppe bedeutet.

6. Monoazoverbindungen gemäss Anspruch 1, dadurch gekennzeichnet, dass Y eine substituierte $C_1$–$C_8$ Alkylgruppe bedeutet.

7. Monoazoverbindungen gemäss Anspruch 6, dadurch gekennzeichnet, dass Y eine durch OH substituierte $C_1$–$C_4$ Alkylgruppe bedeutet.

8. Verfahren zur Herstellung von Monoazoverbindungen der Formel I gemäss Anspruch 1, dadurch gekennzeichnet, dass man

a) 1 Mol einer Verbindung der Formel II

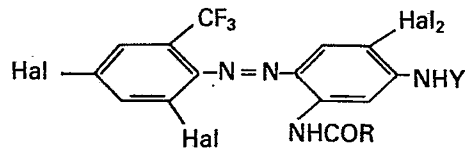 (II)

worin Hal unabhängig voneinander ein Halogenatom bedeutet und die übrigen Symbole die unter Formel I angegebene Bedeutung haben mit einem Mol eines Metallcyanides umsetzt, oder

b) dass man ein Amin der Formel V

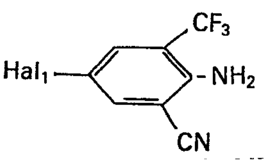
(V)

diazotiert und mit einer Kupplungskomponente der Formel VI

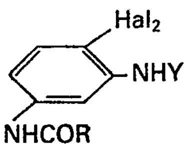
(VI)

worin die Symbole die unter Formel I angegebene Bedeutung haben, kuppelt.

9. Verfahren gemäss Anspruch 8a, dadurch gekennzeichnet, dass man als Metallcyanid Kupfercyanid verwendet.

10. Verfahren gemäss Anspruch 8a, dadurch gekennzeichnet, dass man in einem aprotisch polaren Lösungsmittel bei einer Temperatur von 40 bis 150°C arbeitet.

11. Verfahren gemäss Anspruch 10, dadurch gekennzeichnet, dass man in Dimethylsulfoxyd, Dimethylformamid oder N-Methylpyrrolidon bei einer Temperatur von 80 bis 130°C arbeitet.

12. Verwendung der Monoazoverbindungen oder deren Mischungen der Formel I gemäss Anspruch 1 oder gemäss den Verfahren des Anspruchs 8 erhaltenen Monoazoverbindungen als Farbstoffe zum Färben und Bedrucken von Textilmaterialien welche mit Dispersionsfarbstoffen anfärbbar sind.

13. Verwendung gemäss Anspruch 12 zum Färben und Bedrucken von Polyestermaterialien.

**Claims**

1. A monoazo compound, or a mixture thereof, of the formula I

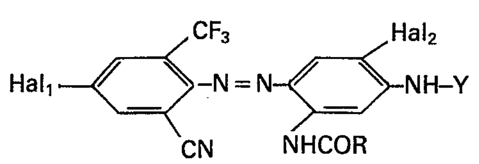
(I)

in which

$Hal_1$ and $Hal_2$ are each independently a halogen atom, R is a $C_1$–$C_4$ alkyl group which is unsubstituted or substituted by halogen or alkoxy, or is a $C_1$–$C_4$ alkoxy group which is unsubstituted or substituted by alkoxy, and Y is a substituted or unsubstituted $C_1$–$C_8$ alkyl group or a $C_3$–$C_4$ alkenyl group which is unsubstituted or substituted by halogen.

2. A monoazo compound according to claim 1, in which $Hal_1$ is a bromine atom.

3. A monoazo compound according to claim 1, in which $Hal_2$ is a chlorine atom.

4. A monoazo compound according to claim 1, in which R is an unsubstituted $C_1$–$C_4$ alkyl group.

5. A monoazo compound according to claim 4, in which R is the methyl group.

6. A monoazo compound according to claim 1, in which Y is a substituted $C_1$–$C_8$ alkyl group.

7. A monoazo compound according to claim 6, in which Y is an OH-substituted $C_1$–$C_4$ alkyl group.

8. A process for the preparation of a monoazo compound of the formula I according to claim 1, which comprises

a) reacting 1 mole of a compound of the formula II

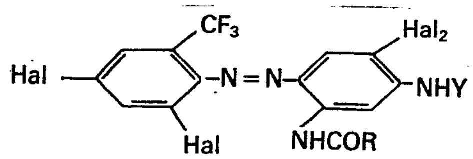
(II)

wherein each Hal independently of the other is a halogen atom and the other symbols are as defined for formula I, with one mole of a metal cyanide, or

b) diazotising an amine of the formula V

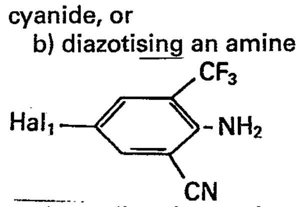
(V)

and coupling the product with a coupling component of the formula VI

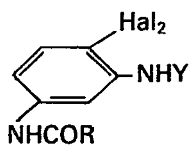
(VI)

in which formulae the symbols are as defined for formula I.

9. A process according to claim 8a, wherein copper cyanide is used as metal cyanide.

10. A process according to claim 8a, which is carried out in an aprotic polar solvent at a temperature of 40–150°C.

11. A process according to claim 10, which is carried out in dimethylsulfoxide, dimethylformamide or N-methylpyrrolidone, at a temperature of 80–130°C.

12. Use of a monoazo compound, or of a mixture thereof, of the formula I according to claim 1, or of a monoazo compound obtained by a process according to claim 8, as a dye for dyeing and printing textile materials which are dyeable with disperse dyes.

13. Use according to claim 12 for dyeing and printing a polyester material.

**Revendications**

1. Composés mono-azoïques et leurs mélanges les uns avec les autres, ayant la formule I:

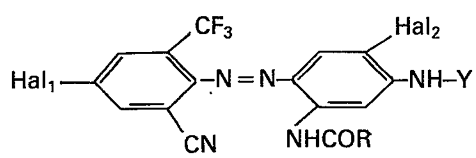
(I)

dans laquelle

$Hal_1$ et $Hal_2$, indépendamment l'un de l'autre, sont des atomes d'halogène; R est un groupe alkyle en $C_1$–$C_4$ éventuellement substitué par de l'halogène ou un radical alcoxy, ou bien un groupe alcoxy en $C_1$–$C_4$ éventuellement substitué par un radical alcoxy, et Y est un groupe alkyle en $C_1$–$C_8$ éventuellement substitué ou bien un groupe alcényle en $C_3$–$C_4$ éventuellement substitué par de l'halogène.

2. Composés mono-azoïques selon la revendication 1, caractérisés par le fait que $Hal_1$ désigne l'atome de brome.

3. Composés mono-azoïques selon la revendication 1, caractérisés par le fait que $Hal_2$ désigne l'atome de chlore.

4. Composés mono-azoïques selon la revendication 1, caractérisés par le fait que R est un groupe alkyle en $C_1$–$C_4$ non substitué.

5. Composés mono-azoïques selon la revendication 4, caractérisés par le fait que R désigne le groupe méthyle.

6. Composés mono-azoïques selon la revendication 1, caractérisés par le fait que Y désigne un groupe alkyle en $C_1$–$C_8$ substitué.

7. Composés mono-azoïques selon la revendication 6, caractérisés par le fait que Y désigne un groupe alkyle en $C_1$–$C_4$ substitué par OH.

8. Procédé pour la préparation des composés mono-azoïques de formule I, selon la revendication 1, caractérisés par le fait que:

a) on fait réagir 1 mole d'un composé de formule II:

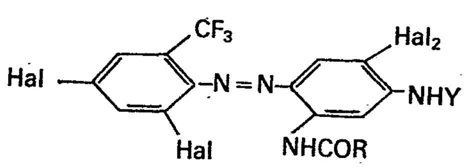

(II)

dans laquelle Hal, indépendamment l'un de l'autre, sont des atomes d'halogène et les autres symboles ont les significations mentionnées sous la formule I avec une mole d'un cyanure métallique, ou

b) on diazote un amine de formule V:

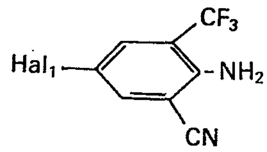

(V)

et on copule avec un copulant de formule VI:

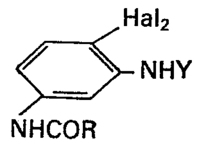

(VI)

dans lesquelles les symboles ont les sygnifications données sous la formule I.

9. Procédé selon la revendication 8a, caractérisé par le fait qu'on utilise comme cyanure métallique le cyanure de cuivre.

10. Procédé selon la revendication 8a, caractérisé par le fait qu'on opère dans un solvant polaire aprotique à une température comprise entre 40 et 150°C.

11. Procédé selon la revendication 10, caractérisé par le fait qu'on opère dans le diméthylsulfoxyde, le diméthylformamide ou dans la N-méthylpyrrolidone, à une température comprise entre 80 et 130°C.

12. Utilisation des composés mono-azoïques, ou de leurs mélanges, de formule I, selon la revendication 1, ou des composés mono-azoïques obtenus selon le procédé de la revendication 8, comme colorants pour la teinture et l'impression des matières textiles qui sont teignables avec les colorants dispersés.

13. Utilisation selon la revendication 12 pour la teinture et l'impression des matières en polyester.